(19) Europäisches Patentamt European Patent Office Office européen des brevets

(11) **EP 4 451 303 A1**

(12) **EUROPEAN PATENT APPLICATION**

(43) Date of publication:
**23.10.2024 Bulletin 2024/43**

(21) Application number: **24169512.1**

(22) Date of filing: **10.04.2024**

(51) International Patent Classification (IPC):
*H01H 9/06* (2006.01)          *H01H 13/14* (2006.01)

(52) Cooperative Patent Classification (CPC):
**H01H 9/061; H01H 9/06; H01H 13/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.04.2023 US 202363495393 P**

(71) Applicant: **Black & Decker, Inc.**
**New Britain, CT 06053 (US)**

(72) Inventors:
• **SIKORA, Michael P.**
**Baltimore, 21230 (US)**
• **KUNZ, Eric L.**
**Shrewsbury, 17361 (US)**
• **McMULLEN, Hugh F.**
**Edgewater, 21037 (US)**
• **EVANS, Daniel T.**
**Pequea, 17565 (US)**

(74) Representative: **SBD IPAdmin**
**270 Bath Road**
**Slough, Berkshire SL1 4DX (GB)**

(54) **VARIABLE-SPEED TRIGGER SWITCH INCLUDING CONDUCTIVE ELASTIC MATERIAL**

(57)    A switch assembly (100) is provided including a plunger (110), an elastomer member (150) mechanically coupled to the plunger and moveable along a movement axis, and a circuit board (140) oriented substantially perpendicularly to the movement axis. The elastomer member includes posts (152, 154) of varying heights including electrically conductive material. The circuit board includes conductive tracks (144, 146) facing the posts and electrically coupled to a resistive divider. An actuation of the plunger causes a variable number of contact points between the conductive tracks and the posts corresponding to a travel distance of the plunger along the movement axis. The resistive divider is configured to output a variable voltage signal based on the variable number of contact points.

FIG. 1

## Description

RELATED APPLICATION

This patent application claims priority from US Provisional Patent Application No. 63/495,393 filed April 11, 2023, which is incorporated herein by reference in its entirety.

FIELD

This application relates to a trigger switch for a power tool, and in particular to a compact trigger switch including a conductive elastomer.

BACKGROUND

US Patent Pub. No. 2015/0280515, filed March 30, 2015, content of which is incorporated herein by reference in its entirety, describes an integrated switch and control module for driving a brushless DC (BLDC) motor in a power tool. This module, in an embodiment, includes a planar circuit board that accommodates a controller, a series of power switches configured as a three-phase inverter circuit, a series of corresponding heat sinks mounted on the power switches, and an input unit coupled to a trigger. An input unit that in part includes a trigger switch is mounted on the switch and control module. The trigger switch includes a plunger that carries a wiper. As the trigger switch is moved along its axis, the wiper slides over a potentiometer and a series of conductive tracks.

As power tools are becoming more compact and demand higher power density, compactness and efficiency of various tool components, including the input unit and the trigger assembly, becomes more important. This disclosure addresses the need for a compact and efficient trigger assembly that meets the size requirements of modern power tools.

US Patent Publication 2022/0376584, which is incorporated herein by reference, disclose a compact variable-speed trigger switch that utilizes a conductive or semi-conductive elastomer member to translate the travel displacement of a trigger switch to a voltage signal having discrete steps. In this design, the elastomer is in selective engagement with a circuit board having a series of concentric ring-shaped or semi-annular conductive tracks. The elastomer member includes a semi-spherical or conical shape. As the trigger is pressed, the elastomer member makes contact with a greater number of conductive tracks. The circuit board includes a resistive divider coupled to the conductive tracks, which generate a discrete variable-voltage signal dependent on the number of conductive tracks contacted by the elastomer member.

This section provides background information related to the present disclosure and is not necessarily prior art.

SUMMARY

According to an embodiment, a switch assembly is provided including a plunger; an elastomer member mechanically coupled to the plunger and moveable along a movement axis; and a circuit board oriented substantially perpendicularly to the movement axis. The elastomer member includes posts of varying heights including electrically conductive material. The circuit board includes conductive tracks facing the posts and electrically coupled to a resistive divider. An actuation of the plunger causes a variable number of contact points between the conductive tracks and the posts corresponding to a travel distance of the plunger along the movement axis. The resistive divider is configured to output a variable voltage signal based on the variable number of contact points.

In an embodiment, the elastomer member further includes an activation post in selective engagement with an activation track mounted on the circuit board. The activation track outputs an activation signal in response to contact with the activation post indicative of an initial actuation of the plunger.

In an embodiment, the activation post has a greater height than the plurality of posts.

In an embodiment, the posts are disposed equidistantly from the movement axis, and the conductive tracks are disposed equidistantly from the movement axis.

In an embodiment, the heights of the posts descent incrementally around the movement axis.

In an embodiment, the switch assembly further includes a base member supporting the circuit board, a cover that mates with the base member around the elastomer member, and a biasing element that biases the plunger away from the circuit board through an opening of the cover.

In an embodiment, the biasing element is a compression spring located within the plunger, and the posts are disposed equidistantly around the biasing member.

In an embodiment, each of the conductive tracks includes a first track coupled to a ground node or a power supply and a second track coupled to the resistive divider.

In an embodiment, the resistive divider includes resistors and power switches, each power switch being configured to activate a corresponding resistor within the resistive divider.

In an embodiment, the resistors are arranged in series between the power supply node and the voltage signal, and gates of the power switches are coupled to the conductive tracks.

According to an embodiment, a power tool is provided including a housing, an electric motor disposed within the housing; a trigger mounted on the housing; and a switch assembly located within the housing and engageable by the trigger. The trigger assembly includes a plunger; an elastomer member mechanically coupled to the plunger and moveable along a movement axis; and a circuit board oriented substantially perpendicularly to the movement axis. The elastomer member includes posts of varying heights including electrically conductive material. The circuit board includes conductive tracks facing the posts and electrically coupled to a resistive divider. An actuation of the plunger causes a variable number of contact points between the conductive tracks and the posts corresponding to a travel distance of the plunger along the movement axis. The resistive divider is configured to output a variable voltage signal based on the variable number of contact points.

In an embodiment, the trigger assembly of the power tool may include any of the features described above.

According to an embodiment, a power tool is provided comprising: a housing; an electric motor disposed within the housing; a trigger pivotably mounted on the housing around a pivot member located between a first portion and a second portion thereof; and a switch assembly located within the housing and engageable by the trigger, the switch assembly comprising a first variable-speed switch and a second variable-speed switch interfacing at least one circuit board, wherein, when the first portion of the trigger is actuated, the first variable-speed switch is engaged by the trigger and contacts the at least one circuit board along a first movement axis that is substantially perpendicular to the circuit board, and when the second portion of the trigger is actuated, the second variable-speed switch is engaged by the trigger and contacts the at least one circuit board along a second movement distanced from the first movement axis that is substantially perpendicular to the circuit board, wherein the switch assembly outputs at least one variable speed signal and at least one of a direction signal or a mode signal associated with the electric motor based on actuation of one of the first variable-speed switch or the second variable-speed switch.

In an embodiment, the trigger includes a first actuator post located on the first portion and a second actuator post located on the second portion, and wherein the first variable-speed switch includes a first plunger aligned with the first actuator post and the second variable-speed switch includes a second plunger aligned with the second actuator post.

In an embodiment, an engagement a pivoting movement of the trigger in a first pivoting direction causes engagement between the first actuator and the first plunger whereby the first variable-speed switch generates the variable speed signal according to displacement of the trigger in the first pivoting direction and generates the direction signal in a first rotational direction. Further, the pivoting movement of the trigger in a second pivoting direction causes engagement between the second actuator and the second plunger whereby the second variable-speed switch generates the variable speed signal according to displacement of the trigger in the second pivoting direction and generates the direction signal in a second rotational direction.

In an embodiment, the switch assembly includes a base member, a circuit board supported by the base member, and a cover coupled to the base member around the circuit board and including two openings through which the first plunger and the second plunger extend out.

In an embodiment, the first variable-speed switch comprises a first elastomer member in selective contact with a first plurality of conductive tracks mounted on a first section of the circuit board, and the second variable-speed switch comprises a second elastomer member in selective contact with a second plurality of conductive tracks mounted on a second section of the circuit board.

In an embodiment, the first variable-speed switch includes a first elastomer member coupled to the first plunger and a first set of conductive tracks mounted on a first section of the circuit board in selective engagement with the first elastomer member, and the second variable-speed switch includes a second elastomer member coupled to the second plunger and a second set of conductive tracks mounted on a second section of the circuit board in selective engagement with the second elastomer member.

In an embodiment, the first elastomer member includes posts of varying heights including electrically conductive material, the first set of conductive tracks is electrically coupled to a resistive divider outputting a voltage signal, an actuation of the first plunger causes a variable number of contact points between the first set of conductive tracks and the posts corresponding to a travel distance of the first plunger, and the resistive divider is configured to output a variable voltage signal based on the variable number of contact points.

In an embodiment, the power tool further comprises a controller configured to operate the motor according to the at least one variable speed signal and the mode signal, and, wherein, when the first portion of the trigger is actuated, the controller operates the motor in a first mode of operation, and when the second portion of the trigger is actuated, the controller operates the motor in a second mode of operation.

BRIEF DESCRIPTION OF THE DRAWINGS

The various advantages of the embodiments will become apparent to one skilled in the art by reading the following specification and appended claims, and by referencing the following drawings, in which:

FIG. 1 depicts a partial view of a power tool incorporating a variable-speed switch assembly incorporating an elastomer member and a circuit board, according to an embodiment.
FIG. 2 is perspective view of the switch assembly, according to an embodiment;
FIG. 3 is an exploded view of the switch assembly, according to an embodiment;
FIG. 4 depicts a cross-sectional view of the switch assembly, according to an embodiment;
FIG. 5 depicts a perspective view of the elastomer member, according to an embodiment;
FIG. 6 depicts a view of the circuit board, according to an embodiment;
Fig. 7 depicts a side view of the elastomer member and a plunger of the switch assembly, according to an embodiment;
Fig. 8 depicts a perspective view of the elastomer member and the plunger, according to an embodiment;
Fig. 9 depicts a circuit diagram of an activation circuit of the circuit board, according to an embodiment;
Fig. 10 depicts a circuit diagram of a variable-speed detection circuit of the circuit board, according to an embodiment;
FIG. 11 depicts a partial view of a power tool incorporating the switch assembly, according to an alternative embodiment;
FIG. 12 depicts a partial view of a power tool incorporating a dual-switch assembly for forward and reverse operation and a trigger, according to another embodiment;
FIG. 13 depicts a partial exploded view of the power tool incorporating the dual-switch assembly and the trigger, according to an embodiment;
FIG. 14 depicts a partial side cross-section view of the dual-switch assembly and the trigger, according to an embodiment;
FIGs. 15A and 15B depict views of the dual-switch assembly and the trigger operating in reverse and forward directions respectively, according to an embodiment; and
FIG. 16 depicts a block diagram of the circuit board of the dual-switch assembly, according to an embodiment.

Corresponding reference numerals indicate corresponding parts throughout the several views of the drawings.

DETAILED DESCRIPTION

Example embodiments will now be described more fully with reference to the accompanying drawings.

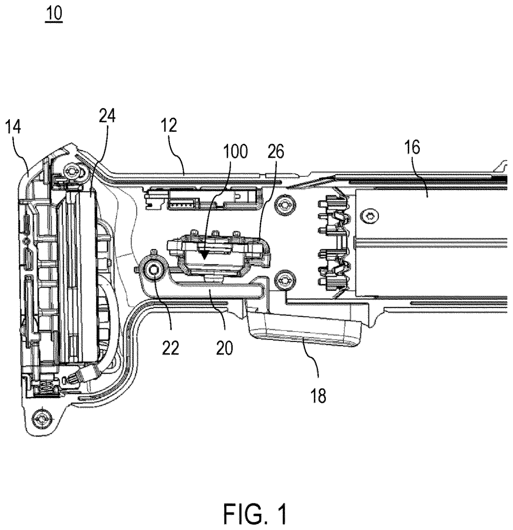

FIG. 1 depicts a partial view of an exemplary power tool 10, according to an embodiment. The power tool 10 may include a housing 12, a battery receiving portion 14 that receives a removable battery pack, an electric motor 16 housed within the housing, a trigger switch 18 mounted on the housing 23 and engageable by a tool operator, and an electronic control module 24 that controls supply of electric power from the battery pack to the motor based on the travel displacement of the trigger switch 18. In an embodiment, the motor 16 may be a brushless direct-current (BLDC) motor including a stator and a rotor rotatably received within the stator. In an embodiment, the electronic control module 24 includes a programmable controller, such as a microcontroller, and electronic switching components for regulating the supply of power from the battery pack to motor 16. In an embodiment, electronic control module 24 is disposed proximate the battery receiving portion 24, though it must be understood that depend on the power tool shape and specifications, electronic control module 24 may be disposed at any location within the power tool.

While in this embodiment, the power source is a battery pack, it is envisioned that the teachings of this disclosures may be applied to a power tool with an AC power source. Such a power tool may include, for example, a rectifier circuit coupled to the AC power source.

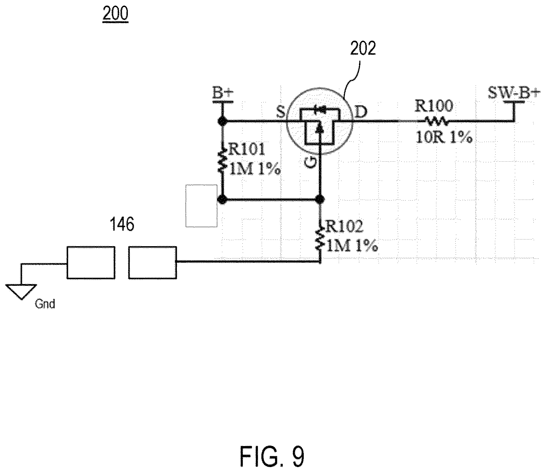

It must be understood that, while FIG. 9 illustrates a power tool such as a grinder having a brushless motor accommodated within an elongated body, the teachings of this disclosure may be used in any power tool, including, but not limited to, drills, saws, nailers, fasteners, impact wrenches, grinders, sanders, cutters, etc. Also, teachings of this disclosure may be used in any other type of tool or product that include a rotary electric motor, including, but not limited to, mowers, string trimmers, vacuums, blowers, sweepers, edgers, etc.

In an embodiment, the power tool 10 includes a variable-speed switch assembly 100, which is discussed in detail in this disclosure. The power tool 10 includes a series of internal ribs 26 within the housing 12 designed to hold the switch assembly 100. Extending integrally from the trigger switch 18 is a link member 20 located within the housing 12 supported by a pivot structure 22. The link member 20 extends below the switch assembly 100 and selectively engages a button of the switch assembly 100 with the actuation of the trigger switch 18. The distance by which the link member 20 presses the button is proportional to the distance by which the trigger switch 18 is pressed by the operator.

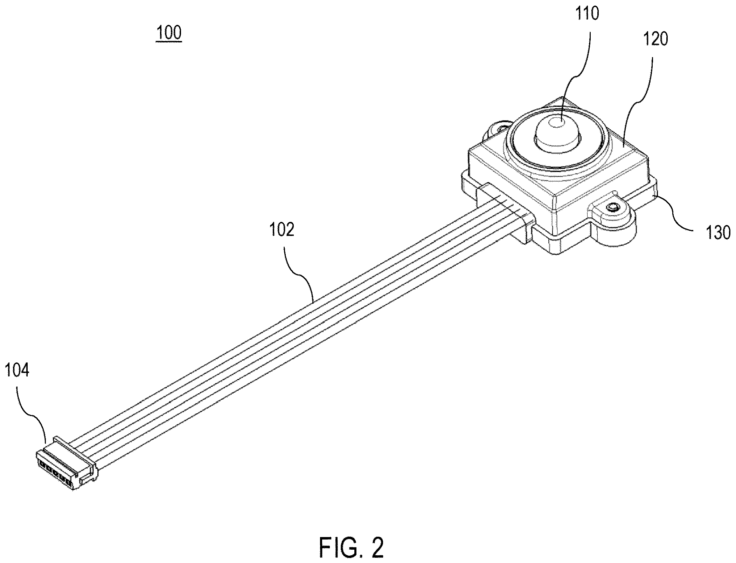

FIG. 2 is perspective view of a variable-speed switch assembly 100 incorporating, according to an embodiment.

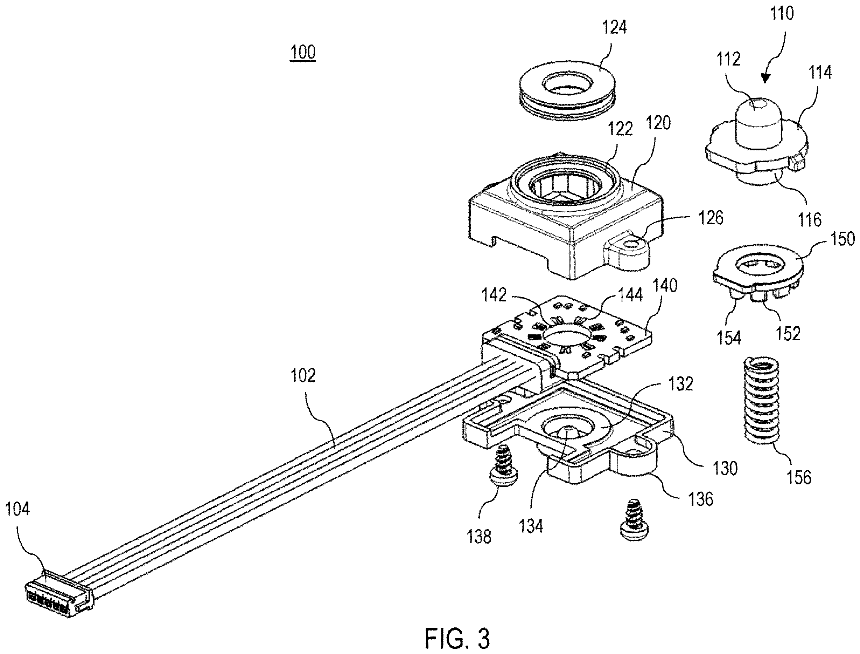

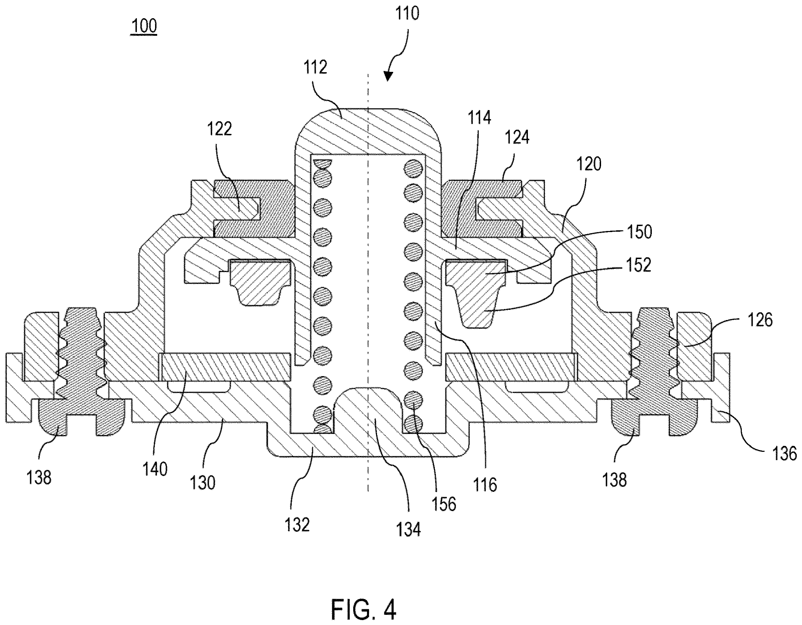

FIG. 3 is an exploded view of the switch assembly 100, according to an embodiment. FIG. 4 depicts a cross-sectional view of the switch assembly, according to an embodiment;

In an embodiment, switch assembly 100 includes a plunger 110, a cover 120, a base member 130, a circuit board 140 housed within the base member 130 and the cover 120, and an elastomer member 150.

In an embodiment, the plunger 110 is provided with a rigid structure and includes a button 112 located outside the cover 120 and engageable by a trigger assembly of a power tool, a cylindrical plunger portion 116 extending from the button 112 and having an elongated cavity therein, and a flange 114 extending around the plunger portion 116.

In an embodiment, the elastomer member 150 includes a disc-shaped main body supported by the flange portion 114, e.g., via an adhesive. In an embodiment, the elastomer member 150 further includes a series of flexible posts 152 and 154 of varying heights that are disposed around the plunger portion 116 and project away from the flange portion 114 in the direction of the circuit board 140. The elastomer member 150, including the posts 152 and 154, is made of an electrically conductive elastomer-based material. An example of this is elastic or flexibly deformable polymer material such rubber that includes a distributed filling of conductive material such as copper particles. Alternatively, in an embodiment, the elastomer member 150 may be made up on a combination of conductive and non-conductive material. In one example, the flexible posts 152 and 154 may be made primarily of non-conductive elastomer material with a layer of conductive material secured to their end tips. As the button 112 is initially pressed, the flexible posts 154 makes the first contact with the circuit board 140, causing the circuit board 140 to initiate an ON signal to turn ON the power tool controller

In an embodiment, the cover 120 includes a series of side walls arranged to mate with the base member 130 around the circuit board 140 and a top wall having a circular opening therein that receives the button 112 of the plunger 110. The top wall includes an annular portion 112 that rigidly receives a rubber seal 124 around the button 112. The plunger 110 interfaces with the seal 124 to provide axial alignment during actuation and maintain a consistent interaction between the elastomer member 150 and the circuit board 140. Two side projections 126 are disposed adjacent opposite side walls and include screw holes for attaching the cover to the base member 130.

In an embodiment, the base member 130 forms a mounting region 132 for the circuit board 140 and includes a center recessed region that supports a central post 134. The post 134 supports a compression spring 156. The compression spring 156 is received within the elongated cavity of the plunger 110 to apply a biasing force to the plunger 110 away from the circuit board 140 and return the plunger 140 to a default OFF position. Two side projections 136 are disposed adjacent opposite side walls and include screw holes for attaching the base member 130 to the side projections 126 of the cover 120 via fasteners 138.

In an embodiment, the circuit board 140 includes a center opening 142 and a series of conductive tracks 144 and 146 disposed on the top surface of the circuit board 140 around the center opening 142. The circuit board 140 further includes a resistive divider (also known as a resistor network or voltage divider) coupled to the conductive tracks 144 and 146. In an embodiment, the conductive tracks are coupled via a series of plated-through vias to a bottom surface of the circuit board 140 on which the resistive divider is disposed. When conductive track 146 is engaged by the flexible post 154 of the elastomer member 150, it initiates an activation signal for activated the power tool, as discussed in detail later. As the conductive tracks 144 are sequentially contacted by the flexible posts 152 of the elastomer member 150, the corresponding resistors in the resistive divider are also sequentially activated, thus producing a variable voltage signal (i.e., also referred to here as a wiper signal) corresponding to the position of the button 112 relative to the circuit board 140, as discussed in detail later.

In an embodiment, a set of signal wires 102 are coupled to the circuit board 140 on one end and to a terminal block 104 on the other end. In an embodiment, the terminal block 104 is configured to couple to the electronic control module 24. As discussed later in detail, the electronic control module 24 receives the activation signal and the wiper signal from the circuit board 140 via the signal wires 102.

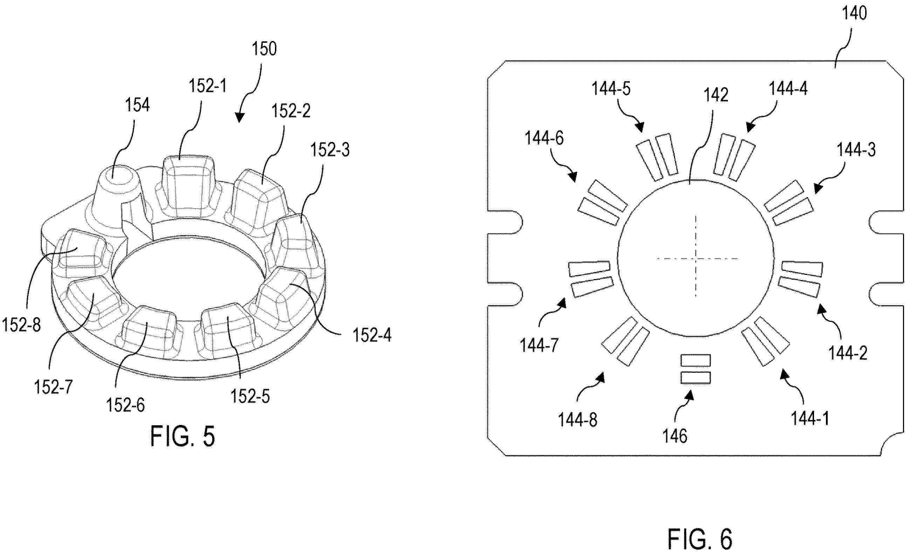

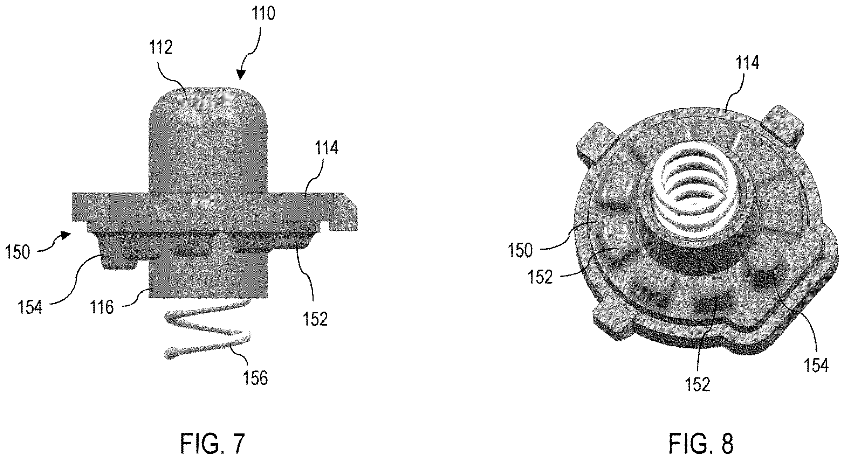

FIG. 5 depicts a perspective view of the elastomer member 150, according to an embodiment. FIG. 6 depicts a view of the circuit board 140, according to an embodiment. Fig. 7 depicts a side view of the elastomer member 150 and the plunger 110, according to an embodiment. Fig. 8 depicts a perspective view of the elastomer member 150 and the plunger 110, according to an embodiment.

As shown in these figures, post 154 (herein referred to as the activation post 154) has a greater height than the remaining posts 152 (herein referred to as variable-speed posts 152-1 through 152-8). As the power tool trigger 18 is pressed and the button 112 of the plunger is actuated, the plunger 110 moved in the direction of the circuit board 140 against the biasing force of the compression spring 156. The activation post 154 is the first post to make contact with the circuit board 140. Specifically, the activation post 154 makes contact with a pair of conductive tracks 146 (herein referred to as the activation tracks 156). This contact causes the circuit board 140 to generate the activation signal that causes activation of the electronic control module 24.

In an embodiment, variable-speed posts 152-1 through 152-8 are disposed equidistantly around the plunger portion and are of substantially the same top-view shape and size, but they vary by height. The heights of the posts 152-1 through 152-8 decrease sequentially, e.g., by 1 mm each. Each post 152-1 through 152-8 corresponds to one step in the depression process of the button 112, with post 152-1 making contact with the circuit board 140 once the trigger 18 is pressed in slightly further than the initial actuation, and post 152-8 making contact with the circuit board 140 at full depression of the trigger 18. In an embodiment, pairs of conductive tracks 144-1 through 144-8, disposed on the circuit board equidistantly around the center opening 142 are sequentially contacted by the posts 152-1 through 152-8 respectively.

In an embodiment, the conductive pads of each pair are kept in close proximity to one another, e.g., at a distance less than 2mm from each other. By keeping the conductive pads of each pair close, the electrical path through the elastomer member 150 is reduced and the effect of the resistance of the elastomer member 150 on the circuit performance is minimized. The material characteristics of the elastomer material, including the hardness of the material, can therefore be adjusted as needed for the specific application without affecting the function and performance of the electric circuit. Furthermore, environmental factors such as temperature and humidity, which normally affect the electrical resistance of polymer material, have minimal impact on the performance of the electric circuit.

While the above-described embodiment is described with reference to variable-speed posts 152-1 through 152-8 being disposed equidistantly around a center axis, other arrangements and configurations of the variable-speed posts is within the scope of the invention. Further, while variable-speed posts 152-1 through 152-8 are integrally formed as a part of a single elastomer member 150, the variable-speed posts may be alternatively formed individually. Any arrangement of elastomer-based posts that engage the circuit board 140 one at a time as a result of the actuation of the trigger switch is within the scope of this disclosure.

Fig. 9 depicts a circuit diagram of an activation circuit 200 of the circuit board, according to an embodiment. In an embodiment, one of the activation tracks 146 is coupled to the ground, and one is coupled via a resistor R102 to a gate of an activation power switch 202. When the conducive tracks 146 are contacted by the activation post 154, the electrical conductivity of the elastomer member 150 couples the two activation tracks 146 and grounds the gate of the activation power switch 202, thus activating the activation power switch 202 and connecting a SW-B+ node (i.e., the activation signal) to the B+ terminal of the battery pack. The activation signal is coupled to the electronic control module 24 and alerts the controller to awaken and begin activating the power tool 10.

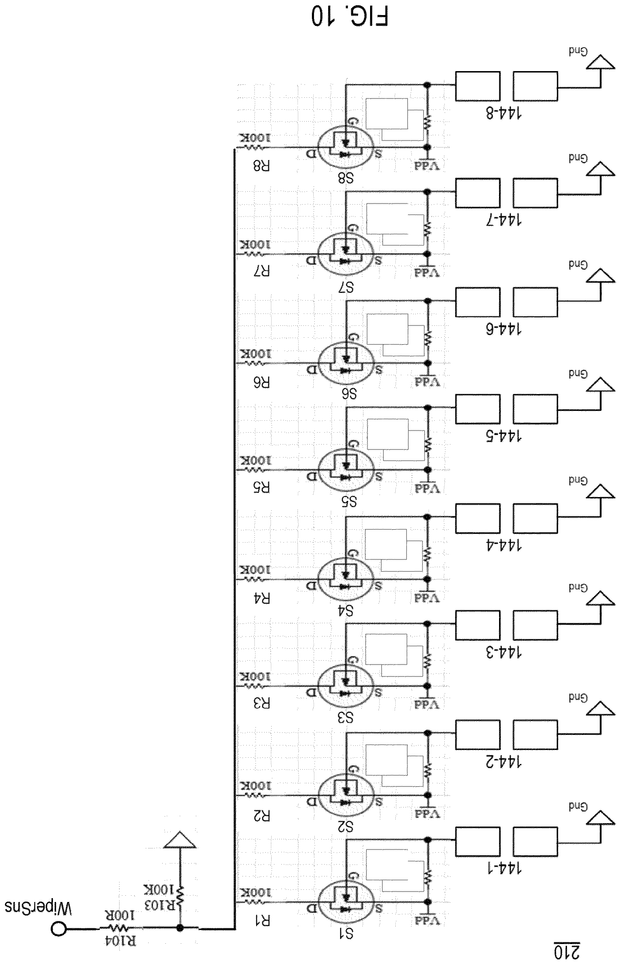

Fig. 10 depicts a circuit diagram of a variable-speed detection circuit 210 of the circuit board, according to an embodiment. In an embodiment, each pair conductive tracks 144-1 through 144-8 includes a first track that is coupled to the ground and a second track that is coupled, via a corresponding resistor circuit and a power switch, to a WiperSns (wiper signal). For example, pair of conductive tracks 144-1 is coupled to a gate of a power switch S1 disposed between a resistor R1 and a power supply node Vdd (e.g. 3.3 volts). When the post 152-1 makes contact with the pair of conductive tracks 144-1, the elastomer member 150 electrically connects the pair of conductive tracks 144-1 and consequently grounds the gate of the power switch S1. This in turn electrically connects the wiper signal to Vdd via resistor R1. The wiper signal is coupled to the ground node via the resistive divider R103 and R104, and it is therefore at zero volts in the default (disengaged) position of the trigger. Once the wiper signal is connected to Vdd, resistors R1 and R103 form a voltage divider resistor circuit as follows:

As the trigger 18 is pressed further, additional pairs of conductive tracks 144-2, 144-3, etc. are contacted by the elastomer member 150, thus adding more resistors R2, R3, etc. to the voltage divider circuit. The voltage of the wiper signal therefore increases in a step-wise fashion as follows:

In an embodiment, at full trigger pull, the voltage of the wiper signal becomes substantially equal to Vdd voltage. In an embodiment, the wiper signal is coupled to the electronic

$$V_{wiperSns} = V_{dd} \frac{R103}{(R1 + R103)}$$

$$V_{wiper\,Sn} = V_{dd} \frac{R103}{(\frac{1}{R1} + \frac{1}{R2} ... + \frac{1}{Rn} etc)^{-1} + R103}$$

control module 24 and provides the above-described variable voltage signal indicating of the amount of trigger travel distance to the controller for controlling the speed of the motor 16.

The above-described circuit configuration is different from conventional variable-speed detection circuits, in that it utilizes power switches to selectively activate the resistors within the voltage divider resistor circuit. An example of a conventional variable-speed detection circuit can be found in US 9,508,498, which is incorporated herein by reference in its entirety. In this circuit, the resistors are directly coupled across the conductive tracks, such that sequential engagement of the conductive tracks add a greater number of the resistors to the voltage divider circuit. In this disclosure, by contrast, the conducive tracks 144-1 through 144-8 are electrically coupled to gates of the corresponding power switches S1-S8, which in turn control the activation of the resistors R1-R8 within the voltage divider resistor circuit. This configuration is more robust and reliable than the conventional approach and allows the design engineers to tune the variable speed output voltage profile by independently controller the resistor on each power switch output.

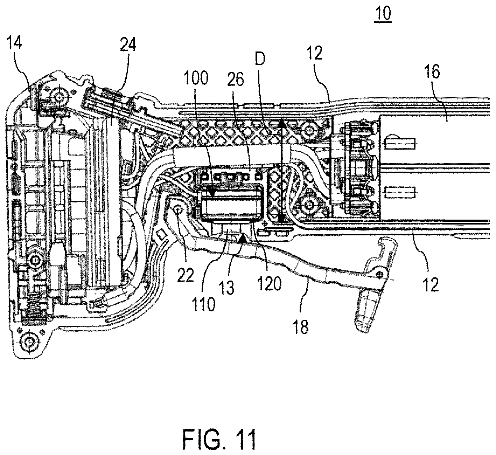

FIG. 11 depicts a partial view of a power tool incorporating the switch assembly, according to an alternative embodiment. As shown here, the internal ribs 26 of the housing may be arranged to position the switch assembly 100 in close proximity to the lower wall of the housing 12, with cover 120 of the switch assembly 100 abutting the interior of the lower wall of the housing 12 and the plunger 110 extending through an opening 13 formed in the lower wall of the housing 12 for engagement with the trigger switch 18. This arrangement forms a cavity between the internal ribs 26 and the upper wall of the housing 12 for passage of a series of power and signal wires between the motor 16 and the electronic control module 24 as well as airflow for cooling the motor 16. In an embodiment, the switch assembly 100 and the internal ribs 26 together occupy a vertical distance (i.e., along a vertical plane that intersects the trigger switch 18) that is at smaller than or equal to approximately 22 mm, preferably approximately smaller than or equal to 19 mm. In a power tool where the housing 12 has an inner diameter D at the handle portion that is smaller than or equal to approximately 35 mm, the switch assembly 100 and the internal ribs 26 together occupy a vertical distance that is smaller than or equal to approximately 55% of the inner diameter D.

Embodiments described above are directed to a compact switch assembly 100 for variable-speed detection in power tools. The switch assembly 100 outputs at least a variable-voltage signal with at least 8 degrees of resolution corresponding to the amount of the trigger displacement. This variable-voltage signal is processed by the electronic control module 24 to control the output speed of the motor.

In addition to speed control, controlling the direction of rotation of the motor is highly desirable for power tools such as drills, fasteners, and ratchets. In some power tools, the direction of rotation of the motor is set by a forward/reverse actuator that is engageable by the operator. For example, in a DeWalt® DCD800B cordless drill/driver, the forward/reverse actuator is provided as a laterally engageable actuators located above the variable-speed trigger with buttons protruding on either side of the tool housing. The operator may control the rotation of the motor in a forward (i.e., clockwise) direction by pressing the right-side button and in a reverse (i.e., counter-clockwise) direction by pressing the left-side button.

An embodiment of the invention described herein relates to utilizing the above-described switch assembly for forward/reverse control in addition to variable-speed control. Specifically, as described below in detail, a dual-switch assembly is provided including two variable-speed switches, each including the variable-speed arrangement described above, where actuation of a first switch drives the motor in a forward direction and the actuation of a second switch drives the motor in a reverse direction. Further, a trigger switch is provided that allows the user to actuate the first switch by pressing a front portion of the trigger and actuate the second switch by pressing a rear portion of the trigger. These features are described here in detail.

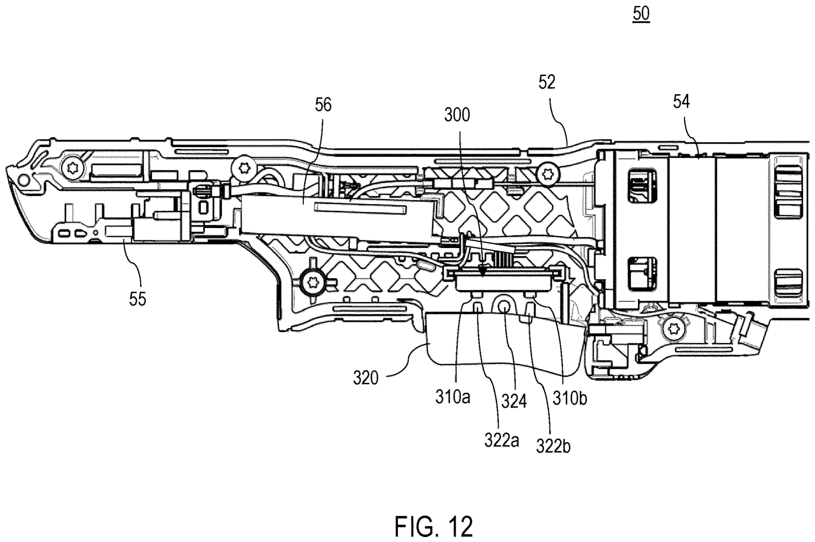

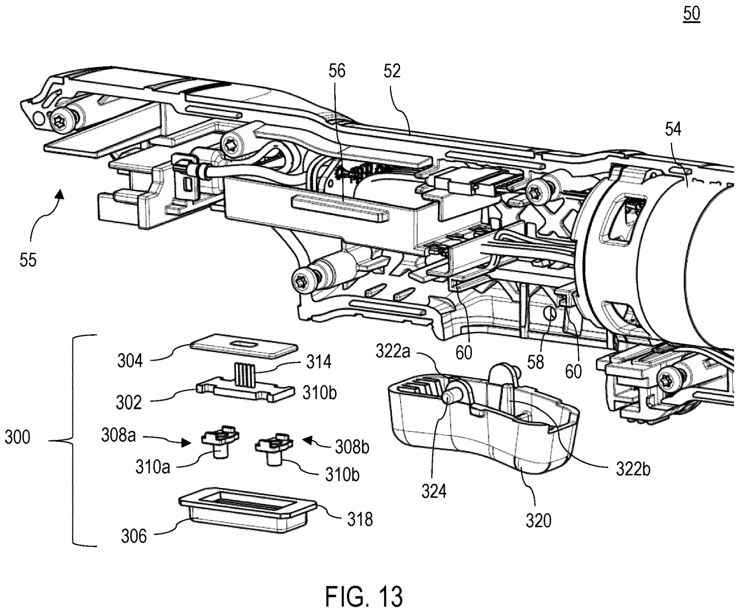

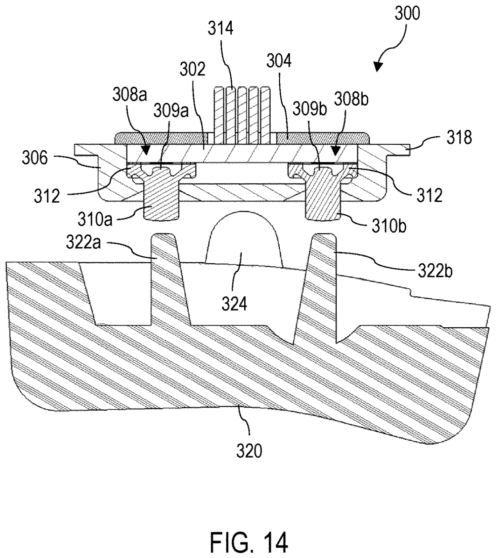

FIG. 12 depicts a partial view of a power tool 50 incorporating a dual-switch assembly 300 for forward and reverse operation and a trigger 320, according to an embodiment. FIG. 13 depicts a partial exploded view of the power tool 50 incorporating the dual-switch assembly 300 and the trigger 320, according to an embodiment. FIG. 14 depicts a partial side cross-section view of the dual-switch assembly 300 and the trigger 320, according to an embodiment.

In an embodiment, as shown in these figures, power tool 50 is an electric ratchet tool by way of example, including a tool housing 52, an electric motor 54 houses within the tool housing to drive an output ratchet member (not shown), a battery receiving portion 55 that receives a removeable battery pack (not shown), and an electronic control module 56 that controls supply of electric power from the battery pack to the motor 54 to control the speed and direction of rotation of the motor based on signals from the dual-switch assembly 300.

In an embodiment, the dual-switch assembly 300 includes rear and front variable-speed switches 308a and 308b provided at an axial distance relative to one another facing the trigger 320. The variable-speed switch 308a, 308b respectively include rear and front plungers 310a and 310b coupled to rear and front elastomer members 309a and 309b. Each elastomer member 309a and 309b and plunger 310a and 310b is fundamentally similar to elastomer member 150 and plunger 110 previously discussed, with the plunger being spring-loaded to move the elastomer member along an axis of movement, and the elastomer member including a series of flexible posts of varying heights as the plunger is pressed in. In an embodiment, the rear variable-speed switch 308a is utilized to generate a REVERSE direction signal and the front variable-speed switch 308b is utilized to generate a FORWARD direction signal.

In an embodiment, the trigger 320 is pivotably coupled to the housing 52 via a pivot member 324 that aligns approximately halfway between the rear and rear variable-speed switches 308a and 308b along the axial direction. The pivot member 324 may be, for example, oppositely-projecting pivot pins received into corresponding holes 58 of the housing 52 as the two housing halves of the housing 52 are coupled together around the trigger 320. The trigger 320 further includes rear and front actuator posts 322a and 322b that extend from the trigger 320 at locations forward and rearward of the pivot member 324 in alignment with the rear and front plungers 310a and 310b.

In an embodiment, the dual-switch assembly 300 includes a circuit board 302 on which two sets of conductive tracks are located. Each set of conductive tracks is similar to conductive tracks 144 and 146 previously described. In addition, the dual-switch assembly 300 includes a base member 304 (similar to base member 130 previously described) to which the circuit board 302 is mounted, and a cover 306 (similar to cover 120 previously described) secured to the base member 302 around the circuit board 302. In an embodiment, the base member 304 may be fastened, glued, or molded to the cover 306 via any known means to substantially encapsulate the circuit board 302. The cover 306 may include a side flange 308 that is captured within corresponding interior ribs 60 of the tool housing 52 to secure the dual-switch assembly 300 within the tool housing 52. The cover 306 securely houses the rear and front variable-speed switches 308a and 308b and includes two openings through which the rear and front plungers 310a and 310b project out of the dual-switch assembly 300. A series of signal and/or power wires 314 coupled to the circuit board 302 pass through an opening of the base member 304 for connection to the electronic control module 56. In an embodiment, seals (similar to seal 124 previously discussed) may be disposed around the button portions of the plungers 310a and 310b.

In an embodiment, the flexible posts of the elastomer members 309a or 309b are arranged to sequentially contact a corresponding conductive track of the circuit board 302 as the plunger 301a or plunger 301b is pressed in towards the circuit board 302. In an embodiment, instead of a center spring 156 as shown in Fig. 4, each variable-speed switch 308a, 308b includes a peripheral elastic wall 312 extending from the plunger 310a, 310b around the elastomer member 309a, 309b, in contact with the circuit board 302, which applies a biasing force on the plunger 310a and 310b away from the circuit board 302.

In an embodiment, in a default position of the trigger 320, neither of the actuator posts 322a and 322b is pressed against the plungers 310a and 310b. Thus, neither elastomer member 309a or 309b contacts the corresponding conductive track of the circuit board 302 to initiate an activation signal. In an embodiment, the trigger 320 may be biased to this default position via one or more springs (not shown). For example, a coil spring (not shown) may be provided around each actuator post 322a and 322b to bias the actuator posts 322a and 322b away from the plungers 310a and 310b.

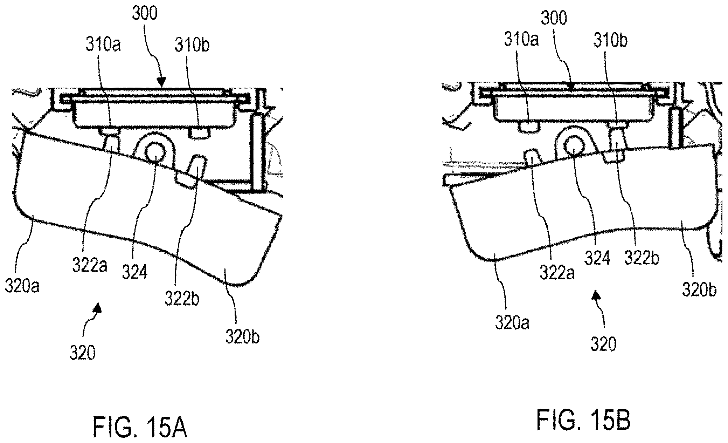

FIGs. 15A and 15B depict views of the dual-switch assembly and the trigger operating in reverse and forward directions respectively, according to an embodiment.

When a rear portion 320a of the trigger 320 is pressed by the operator, as shown in FIG. 15A, the trigger pivots rearwards around the pivot member 324 and the rear actuator post 322a presses against the rear plunger 310a of the dual-switch assembly 300. This causes the rear elastomer member 309a to contact the circuit board 302, causing the circuit board 302 to output the previously discussed activation signal for activating the drive of the motor upon the initial actuation of the rear plunger 310a, and a variable voltage signal (i.e., wiper signal) corresponding to the pressed travel distance of the rear plunger 310a upon further actuation of the rear plunger 310a. In addition, the circuit board 302 outputs a REVERSE direction signal that causes the electronic control module 56 to drive the motor in the reverse (e.g. counter-clockwise) direction.

When a front portion 320b of the trigger 320 is pressed by the operator, as shown in FIG. 15B, the trigger pivots forward around the pivot member 324 and the front actuator post 322b presses against the rear plunger 310b of the dual-switch assembly 300. This causes front rear elastomer member 309b to contact the circuit board 302, causing the circuit board 302 to output the previously discussed activation signal for activating the drive of the motor upon the initial actuation of the rear plunger 310b, and a variable voltage signal (i.e., wiper signal) corresponding to the pressed travel distance of the rear plunger 310b upon further actuation of the rear plunger 310b. In addition, the circuit board 302 outputs a FORWARD direction signal that causes the electronic control module 56 to drive the motor in the FORWARD (e.g. clockwise) direction.

In this manner, the elastomer-based variable-speed switch assembly of the invention is utilized in a compact package side for controlling the direction of rotation of the motor in addition to speed control. This arrangement provides the operator with a user friendly and quick mechanism to switch between forward and reverse rotation control of the motor. This arrangement is particularly handy in tools such as ratchets, where the operator needs to quickly and frequently switch the direction of rotation of the output.

In an embodiment, the dual-switch assembly 300 may be configured to utilize the two switches to operate the motor in two different modes of operation. For example, the circuit board 302 may output a mode signal that is set to a first mode of operation when the rear portion 320a of the trigger 320 is pressed by the operator to cause contact between the rear elastomer member 309a and the circuit board 302, and to a second mode of operation when the front portion 320b of the trigger 320 is pressed by the operator to cause contact between the front elastomer member 309b and the circuit board 302. The mode signal may be generated in place of, or in addition to, the direction signal. In an embodiment, the mode signal may designate a speed setting or speed range for operating the motor. For example, in the first mode of operation, the motor may be operated at a low-speed range (e.g., 0 to 5,000 RPM), and in the second mode of operation, the motor may be operated at a high-speed range (e.g., 0 to 20,000 RPM). In another example, in the first mode of operation, the motor may be operated at a non-linear trigger-speed profile (e.g., one that is more responsive to low-speed ranges, for example, where more trigger steps are associated with the speed range of 0 to 5,000 RPM), and in the second mode of operation, the motor may be operated at a linear trigger-speed profile. A description of various trigger-speed profiles may be found in US Patent No. 8,988,015, which is incorporated herein by reference in its entirety. In another embodiment, the modes of operation may relate to power output ranges or target levels. For example, in the first mode of operation, the motor may be operated at a normal power output, and in the second mode of operation, the motor may be operated at boosted power output (e.g., by application of field-weakening or other motor control method).

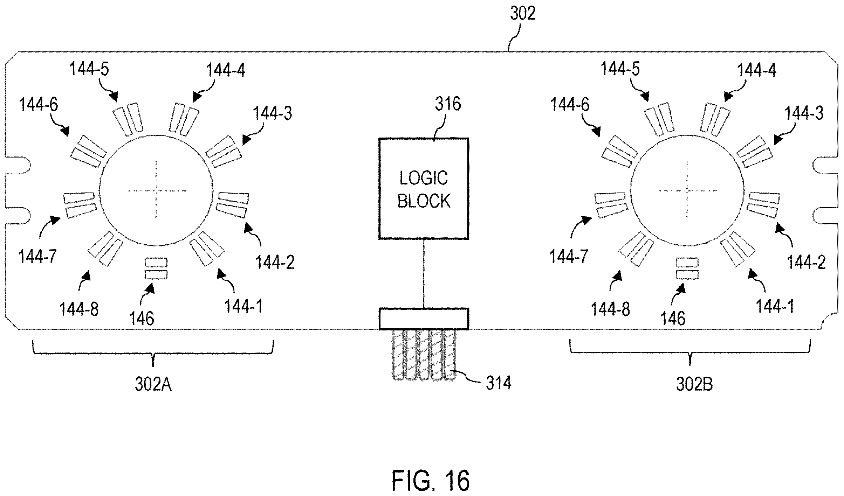

FIG. 16 depicts a block diagram of the circuit board 302 of the dual-switch assembly, according to an embodiment. As discussed above and shown here, the circuit board 302 includes two sets of conductive tracks 302A and 302B provided at a distance from one another. Each set of conductive tracks includes a conductive track 146, which generates an activation signal when it is initially engaged by a flexible post 154 of the elastomer member 309a, 309b. Each set of conductive tracks additionally includes conductive track 144-1 through 144-8, which cooperatively generate a variable-voltage signal through a resistive network (i.e., resistive divider) provided on the circuit board 302 when as they are sequentially engaged by the elastomer member 309a, 309b.

In an embodiment, signal and/or power wires 314 include three power input lines (e.g., Ground, B+, and a low voltage Vdd node for powering the resistive divider of variable-speed detection circuit 210) and two output lines. The two output lines may include a variables-speed signal and a direction signal. In an embodiment, the circuit board 302 includes a logic block 316 coupled to resistive divider associated with the sets of conductive tracks 302A and 302B and output a direction signal as a logic 0 or 1 based on which of the conductive tracks 302A and 302B issues the activation signal. Further, the logic block 316 outputs the variable-speed signal generated from either of the resistive divider associated with either of conductive tracks 302A and 302B.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

**Claims**

1. A switch assembly comprising:

    a plunger;

an elastomer member mechanically coupled to the plunger and moveable along a movement axis, wherein the elastomer member includes a plurality of posts of varying heights comprising electrically conductive material; and a circuit board oriented substantially perpendicularly to the movement axis, the circuit board including a plurality of conductive tracks facing the plurality of posts and electrically coupled to a resistive divider, wherein an actuation of the plunger causes a variable number of contact points between the plurality of conductive tracks and the plurality of posts corresponding to a travel distance of the plunger along the movement axis, and wherein the resistive divider is configured to output a variable voltage signal based on the variable number of contact points.

2. The switch assembly of claim 1, wherein the elastomer member further includes an activation post in selective engagement with an activation track mounted on the circuit board, wherein the activation track outputs an activation signal in response to contact with the activation post indicative of an initial actuation of the plunger.

3. The switch assembly of claim 2, wherein the activation post has a greater height than the plurality of posts.

4. The switch assembly of any preceding claim, wherein the plurality of posts is disposed equidistantly from the movement axis, and the plurality of conductive tracks is disposed equidistantly from the movement axis.

5. The switch assembly of claim 4, wherein the heights of the plurality of posts descent incrementally around the movement axis.

6. The switch assembly of any preceding claim, further comprising a base member supporting the circuit board, a cover that mates with the base member around the elastomer member, and a biasing element that biases the plunger away from the circuit board through an opening of the cover.

7. The switch assembly of claim 6, wherein the biasing element is a compression spring located within the plunger, wherein the plurality of posts is disposed equidistantly around the biasing member.

8. The switch assembly of any preceding claim, wherein the plurality of conductive tracks each includes a first track coupled to a ground node or a power supply and a second track coupled to the resistive divider.

9. The switch assembly of claim 8, wherein the resistive divider includes a plurality of resistors and a plurality of power switches, each of the plurality of power switches being configured to activate a corresponding resistor of the plurality of resistors within the resistive divider.

10. The switch assembly of claim 9, wherein the plurality of resistors is arranged in series between the power supply node and the voltage signal, and a plurality of gates of the plurality of power switches is coupled to the plurality of conductive tracks.

11. A power tool comprising:

   a housing;
   an electric motor disposed within the housing;
   a trigger mounted on the housing; and
   a switch assembly according to any of the preceding claims, wherein the switch assembly is located within the housing and engageable by the trigger, wherein the plunger is moveable along the movement axis by the trigger.

12. The power tool of claim 11, wherein the elastomer member further includes an activation post in selective engagement with an activation track mounted on the circuit board, wherein the activation track outputs an activation signal in response to contact with the activation post indicative of an initial actuation of the trigger.

FIG. 1

FIG. 2

FIG. 3

EP 4 451 303 A1

100

FIG. 4

FIG. 6

FIG. 5

FIG. 8

FIG. 7

FIG. 9

## FIG. 10

FIG. 11

**FIG. 12**

EP 4 451 303 A1

FIG. 13

FIG. 14

EP 4 451 303 A1

FIG. 15B

FIG. 15A

FIG. 16

Europäisches
Patentamt

European
Patent Office

Office européen
des brevets

# EUROPEAN SEARCH REPORT

Application Number

EP 24 16 9512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2022/376584 A1 (SCHWARZ DANIEL L [US] ET AL) 24 November 2022 (2022-11-24)<br>* paragraph [0034] - paragraph [0069]; figures 1-20 *<br>----- | 1-4,6,<br>8-12<br>7<br>5 | INV.<br>H01H9/06<br>H01H13/14 |
| Y | US 2015/280515 A1 (EKSTROM ERIK A [US] ET AL) 1 October 2015 (2015-10-01)<br>* paragraph [0067]; figure 3A *<br>----- | 7 | |
| | | | **TECHNICAL FIELDS SEARCHED (IPC)**<br><br>H01H |

The present search report has been drawn up for all claims

| Place of search | Date of completion of the search | Examiner |
|---|---|---|
| Munich | 30 August 2024 | Drabko, Jacek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 9512

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | | Publication date | Patent family member(s) | | Publication date |
|---|---|---|---|---|---|
| US 2022376584 | A1 | 24-11-2022 | EP | 4099353 A2 | 07-12-2022 |
| | | | US | 2022376584 A1 | 24-11-2022 |
| US 2015280515 | A1 | 01-10-2015 | EP | 2929986 A2 | 14-10-2015 |
| | | | EP | 2946886 A1 | 25-11-2015 |
| | | | US | 2015279592 A1 | 01-10-2015 |
| | | | US | 2015280515 A1 | 01-10-2015 |
| | | | US | 2015280516 A1 | 01-10-2015 |
| | | | US | 2015280517 A1 | 01-10-2015 |
| | | | US | 2015282337 A1 | 01-10-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63495393
- US 20150280515 A
- US 20220376584 A
- US 9508498 B
- US 8988015 B